# EUROPÄISCHE PATENTANMELDUNG

(11) **EP 4 818 639 A1**
(43) Veröffentlichungstag der Anmeldung: **07.10.2026**
(21) Anmeldenummer: 26162197.3
(22) Anmeldetag: 04.03.2026
(51) Int. Cl.: G01C 15/00

(54) **ROTATIONSLASER MIT MINDESTENS EINEM NEIGUNGSSENSOR**

(30) Priorität: 20.03.2025 DE 102025110743
(71) Anmelder: Robert Bosch GmbH, 70442 Stuttgart (DE)
(72) Erfinder: Roehm, Tobias, 72218 Wildberg-Sulz (DE); Zibold, Tobias, 70567 Stuttgart (DE)

(57) **Zusammenfassung**

Bei einem Rotationslaser mit einem Gehäuse, in dem eine Antriebseinheit mit einem Stator und einem Rotor zum rotierenden Antreiben einer Spindel angeordnet ist, wobei der Stator ein Trägerrohr aufweist, welches an einer gegenüber dem Gehäuse verschwenkbaren Trägerplatte (260) angeordnet ist, wobei mindestens ein Neigungssensor zur Detektion einer Neigung der Trägerplatte (260) im Gehäuse angeordnet ist, und wobei eine Lasereinheit mit einer Laserdiode vorgesehen ist, wobei die Laserdiode zumindest abschnittsweise in dem Trägerrohr angeordnet ist, und wobei der mindestens eine Neigungssensor auf einer von der Laserdiode abgewandten Oberseite (201) der Trägerplatte (260) angeordnet ist, ist eine Vielzahl von Füge-Flächen (520) zur planparallelen und/oder konzentrischen Anordnung der Trägerplatte (260), des Stators und des mindestens einen Neigungssensors zueinander vorgesehen.

## Beschreibung

### Stand der Technik

Die vorliegende Erfindung betrifft einen Rotationslaser mit einem Gehäuse, in dem eine Antriebseinheit mit einem Stator und einem Rotor zum rotierenden Antreiben einer Spindel angeordnet ist, wobei der Stator ein Trägerrohr aufweist, welches an einer gegenüber dem Gehäuse verschwenkbaren Trägerplatte angeordnet ist, wobei mindestens ein Neigungssensor zur Detektion einer Neigung der Trägerplatte im Gehäuse angeordnet ist, und wobei eine Lasereinheit mit einer Laserdiode vorgesehen ist, wobei die Laserdiode zumindest abschnittsweise in dem Trägerrohr angeordnet ist, und wobei der mindestens eine Neigungssensor auf einer von der Laserdiode abgewandten Oberseite der Trägerplatte angeordnet ist.

Aus dem Stand der Technik ist ein Rotationslaser mit einem Gehäuse, in dem eine Antriebseinheit mit einem Stator und einem Rotor zum rotierenden Antreiben einer Spindel angeordnet ist, bekannt. Der Stator weist ein Trägerrohr auf, welches an einer gegenüber dem Gehäuse verschwenkbaren Trägerplatte angeordnet ist. Des Weiteren ist mindestens ein Neigungssensor zur Detektion einer Neigung der Trägerplatte im Gehäuse angeordnet. Darüber hinaus ist eine Lasereinheit mit einer Laserdiode vorgesehen, wobei die Laserdiode zumindest abschnittsweise in dem Trägerrohr angeordnet ist. Der mindestens eine Neigungssensor ist auf einer von der Laserdiode abgewandten Oberseite der Trägerplatte angeordnet.

### Offenbarung der Erfindung

Die Erfindung betrifft einen Rotationslaser mit einem Gehäuse, in dem eine Antriebseinheit mit einem Stator und einem Rotor zum rotierenden Antreiben einer Spindel angeordnet ist, wobei der Stator ein Trägerrohr aufweist, welches an einer gegenüber dem Gehäuse verschwenkbaren Trägerplatte angeordnet ist, wobei mindestens ein Neigungssensor zur Detektion einer Neigung der Trägerplatte im Gehäuse angeordnet ist, und wobei eine Lasereinheit mit einer Laserdiode vorgesehen ist, wobei die Laserdiode zumindest abschnittsweise in dem Trägerrohr angeordnet ist, und wobei der mindestens eine Neigungssensor auf einer von der Laserdiode abgewandten Oberseite der Trägerplatte angeordnet ist. Eine Vielzahl von Füge-Flächen sind zur planparallelen und/oder konzentrischen Anordnung der Trägerplatte, des Stators und des mindestens einen Neigungssensors zueinander vorgesehen.

Die Erfindung ermöglicht somit die Bereitstellung eines Rotationslasers, bei dem durch die Füge-Flächen einfach und zuverlässig Toleranzen zwischen der Trägerplatte, dem Stator und dem mindestens einen Neigungssensor zumindest reduziert werden können.

Bevorzugt ist an einer dem mindestens einen Neigungssensor zugewandten Oberseite der Trägerplatte zumindest eine erste Füge-Fläche der Vielzahl von Füge-Flächen ausgebildet und an einer von dem mindestens einen Neigungssensor abgewandten Unterseite der Trägerplatte ist zumindest eine zweite Füge-Fläche der Vielzahl von Füge-Flächen ausgebildet, wobei die zumindest eine erste Füge-Fläche planparallel zu der zumindest einen zweiten Füge-Fläche ausgerichtet ist.

Somit kann leicht und unkompliziert eine geeignete Trägerplatte zur planparallelen Anordnung des Stators und des mindestens einen Neigungssensors bereitgestellt werden.

Vorzugsweise ist an einem Außenumfang des Trägerrohrs zumindest eine dritte Füge-Fläche der Vielzahl von Füge-Flächen ausgebildet und an einer der Trägerplatte zugewandten Oberseite eines Umfangskragens des Trägerrohrs ist zumindest eine vierte Füge-Fläche der Vielzahl von Füge-Flächen ausgebildet.

Somit können auf einfache Art und Weise eine dritte und vierte Füge-Fläche bereitgestellt werden.

Bevorzugt greift das Trägerrohr zumindest abschnittsweise in eine Ausnehmung der Trägerplatte ein, wobei die zumindest eine dritte Füge-Fläche in der Ausnehmung angeordnet ist.

Somit kann eine präzise Ausrichtung und Zentrierung des Stators an einer vorbestimmten Position der Trägerplatte ermöglicht werden.

Vorzugsweise ist die zumindest eine vierte Füge-Fläche an der von dem mindestens einen Neigungssensor abgewandten Unterseite der Trägerplatte angeordnet.

Somit kann einfach und zuverlässig eine geeignete Anordnung der vierten Füge-Fläche ermöglicht werden.

Die zumindest eine vierte Füge-Fläche des Trägerohrs liegt vorzugsweise an der zumindest einen zweiten Füge-Fläche der Trägerplatte an, wobei eine Schraubverbindung die zumindest eine zweite Füge-Fläche und die zumindest eine vierte Füge-Fläche planparallel miteinander verbindet.

Somit kann auf einfache Art und Weise eine planparallele Anordnung der vierten und zweiten Füge-Fläche bzw. des Umfangskragen des Trägerrohrs mit der Trägerplatte ermöglicht werden.

Bevorzugt bildet das Trägerrohr eine Innenaufnahme aus, in der eine fünfte Füge-Fläche der Vielzahl von Füge-Flächen ausgebildet ist, welche zur Anordnung von mindestens einem Lagerelement zum drehbeweglichen Lagern der Spindel vorgesehen ist.

Somit kann leicht und zuverlässig eine konzentrische Anordnung der Spindel im Trägerrohr ermöglicht werden.

Der mindestens eine Neigungssensor weist vorzugsweise ein Neigungssensor-Modulgehäuse mit einer Außenseite auf, an der zumindest eine sechste Füge-Fläche der Vielzahl von Füge-Flächen ausgebildet ist.

Somit kann auf einfache Art und Weise zumindest eine dem mindestens einen Neigungssensor zugeordnete sechste Füge-Fläche bereitgestellt werden.

Bevorzugt ist die zumindest eine sechste Füge-Fläche an einer ersten Außenseite und/oder an einer zweiten Außenseite angeordnet, wobei die erste und zweite Außenseite senkrecht zueinander angeordnet sind.

Somit kann einfach und unkompliziert eine erste und zweite Anordnung des Neigungssensors auf der Trägerplatte ermöglicht werden.

Vorzugsweise weist die Trägerplatte auf der dem mindestens einen Neigungssensor zugewandten Oberseite die zumindest eine erste Füge-Fläche auf, wobei die zumindest eine erste Füge-Fläche an der zumindest einen sechsten Füge-Fläche des mindestens einen Neigungssensors anliegt, wobei die zumindest eine erste Füge-Fläche und die zumindest eine sechste Füge-Fläche mittels einer Schraubverbindung planparallel miteinander verbunden sind.

Somit kann eine sichere und zuverlässige Anordnung des mindestens einen Neigungssensors an der Trägerplatte ermöglicht werden.

Bevorzugt weist das Neigungssensor-Modulgehäuse einen Innenraum auf, in dem zumindest eine siebte Füge-Fläche der Vielzahl von Füge-Flächen ausgebildet ist und eine Röhrenlibelle ist im Innenraum angeordnet, wobei die Röhrenlibelle auf der zumindest einen siebten Füge-Fläche angeordnet ist.

Somit kann leicht und unkompliziert eine präzise Anordnung der Röhrenlibelle im Innenraum des Neigungssensors ermöglicht werden.

Die zumindest eine siebte Füge-Fläche ist bevorzugt planparallel zu der zumindest einen sechsten Füge-Fläche angeordnet. Alternativ ist die zumindest eine siebte Füge-Fläche orthogonal zu der zumindest einen sechsten Füge-Fläche angeordnet.

Somit kann auf einfache Art und Weise eine planparallele Anordnung der Röhrenlibelle durch die zumindest eine sechste, dem Neigungssensor zugeordnete Füge-Fläche an der Trägerplatte ermöglicht werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine perspektivische Ansicht eines erfindungsgemäßen Rotationslasers mit einer Lasereinheit,
- Fig. 2: eine perspektivische Ansicht einer dem Rotationslaser von Fig. 1 zugeordneten Trägerplatte mit einem der Antriebseinheit von Fig. 1 zugeordneten Stator und zwei dem Rotationslaser von Fig. 1 zugeordneten Neigungssensoren,
- Fig. 3: eine perspektivische Ansicht der Trägerplatte mit dem Stator und den zwei Neigungssensoren von Fig. 2 von einer Unterseite aus gesehen,
- Fig. 4: eine Explosionsansicht der Trägerplatte und des Stators von Fig. 3,
- Fig. 5: eine perspektivische Ansicht der Trägerplatte von Fig. 2 bis Fig. 4 von einer Oberseite aus gesehen,
- Fig. 6: eine perspektivische Ansicht der Trägerplatte von Fig. 2 bis Fig. 5 von einer Unterseite aus gesehen,
- Fig. 7: eine Schnittansicht des Stators von Fig. 2 bis Fig. 4 mit einem zugeordneten Laserdiodenhalter,
- Fig. 8: eine perspektivische Ansicht des Stators von Fig. 2 bis Fig. 4 und Fig. 7,
- Fig. 9: eine perspektivische Ansicht des Neigungssensors von Fig. 1 bis Fig. 3,
- Fig. 10: eine perspektivische Ansicht eines Teilschnitts durch den Neigungssensor von Fig. 1 bis Fig. 3 und Fig. 9 ohne die Abschirmung von Fig. 2, von einer Unterseite aus gesehen,
- Fig. 11: eine perspektivische Ansicht eines Teilschnitts durch den Neigungssensor von Fig. 10, und
- Fig. 12: eine Draufsicht auf eine Unterseite des Neigungssensors von Fig. 1 bis Fig. 3 und Fig. 9 bis Fig. 11.

### Beschreibung der Ausführungsbeispiele

In den Figuren werden Elemente mit gleicher oder vergleichbarer Funktion mit identischen Bezugszeichen versehen und nur einmal genauer beschrieben.

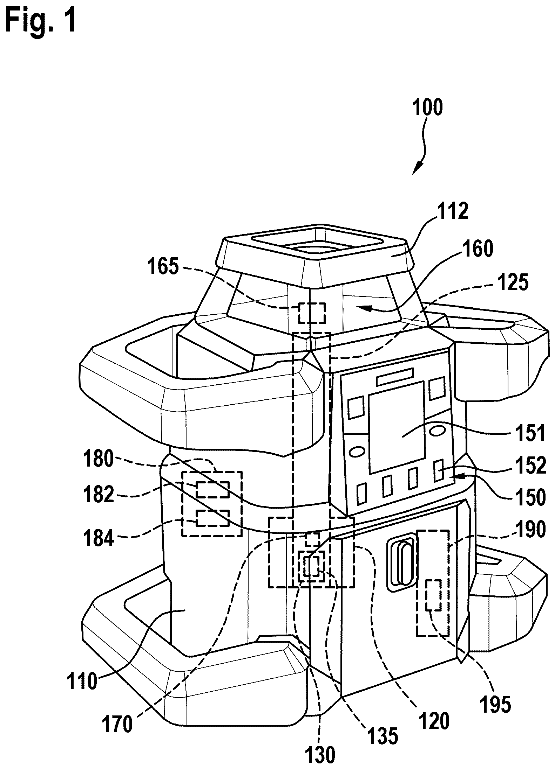

Fig. 1 zeigt einen beispielhaften Rotationslaser 100 mit einem Gehäuse 110, in dem eine Lasereinheit 130 mit einer Laserdiode 135 zur Erzeugung eines Laserstrahls angeordnet ist. Unter einem "Rotationslaser" kann im Kontext der vorliegenden Erfindung auch ein Baulaser oder ein Nivellierlaser verstanden werden. Des Weiteren ist in dem Gehäuse 110 beispielhaft eine Antriebseinheit 120 zum rotierenden Antrieb einer Spindel 125 angeordnet.

Die Lasereinheit 130 ist illustrativ derart an der Spindel 125 angeordnet, dass durch eine Rotation der Spindel 125 der von der Lasereinheit 130 erzeugte Laserstrahl in einer zugeordneten Ebene rotiert. Hierzu ist der Spindel 125 vorzugsweise ein Rotationskopf 160 mit einem Strahlenumleiter 165 zugeordnet. Der Strahlenumleiter 165 ist bevorzugt dazu ausgebildet, den Laserstrahl umzulenken, wodurch der Laserstrahl die zugeordnete Ebene projiziert. Je nach Bauart des Rotationslasers 100 kann die projizierte Ebene horizontal, vertikal oder z.B. mit einem definierten Neigungswinkel zur Erdoberfläche verlaufen. Vorzugsweise ist die Antriebseinheit 120 als Elektromotor ausgebildet.

Darüber hinaus ist in dem Gehäuse 110 bevorzugt eine Elektronikeinheit 190 mit einer Regelungs- und Überwachungsvorrichtung 195 angeordnet. Die Regelungs- und Überwachungsvorrichtung 195 ist vorzugsweise zur Regelung einer Laserleistung der Lasereinheit 130 in Abhängigkeit von einer Betriebsart ausgebildet. Hierbei wird eine Rotationsgeschwindigkeit der Spindel 125 der Antriebseinheit 120 gesteuert oder geregelt. Hierzu ist der Spindel 125 bevorzugt eine Ermittlungseinheit 170 zugeordnet.

Illustrativ ist dem Gehäuse 110 ein dem Rotationskopf 160 zugeordneter Schutzkäfig 112 zum Schutz vor einem Anschlagen des Rotationskopfs 160 zugeordnet.

Der Elektronikeinheit 190 ist bevorzugt eine Bedieneinheit 150 mit einem Display 151 und einer Eingabeeinheit 152 zugeordnet. Die Bedieneinheit 150 ist dabei bevorzugt steuer- oder regeltechnisch mit der Elektronikeinheit 190, insbesondere mit der Regelungs- und Überwachungsvorrichtung 195, verbunden. Die Eingabeeinheit 152 umfasst vorzugsweise zumindest ein Tastenfeld. Alternativ weist die Eingabeeinheit 152 einen Drehregler, einen Touchscreen, einen Schieberegler, eine Fernbedienung oder dergleichen auf. Über die Eingabeeinheit 152 ist durch einen Nutzer z.B. eine Rotationsgeschwindigkeit für die Spindel 125 eingebbar. Alternativ ist die Rotationsgeschwindigkeit der Lasereinheit 130 in einer Betriebsart automatisch regelbar.

Vorzugsweise weist der Rotationslaser 100 eine Nivelliereinheit 180 auf. Die Nivelliereinheit 180 weist bevorzugt zumindest einen Neigungssensor 184 auf, der dazu ausgebildet ist, eine Neigung des Rotationskopfs 160, insbesondere des Strahlenumleiters 165, und/oder der Lasereinheit 130 zu einer vorgegebenen, bevorzugt horizontalen Richtung bzw. zu einem Lot zu bestimmen. Darüber hinaus weist die Nivelliereinheit 180 vorzugsweise mindestens einen Neigungseinstellmotor 182 auf, der dazu ausgebildet ist, den Rotationskopf 160, insbesondere den Strahlenumleiter 165, und/oder die Lasereinheit 130, in Abhängigkeit von einer mittels des zumindest einen Neigungssensors 184 bestimmten Lage, vorzugsweise einer Neigung der Lasereinheit 130 und/oder des Rotationskopfs 160, bevorzugt zum Lot auszurichten.

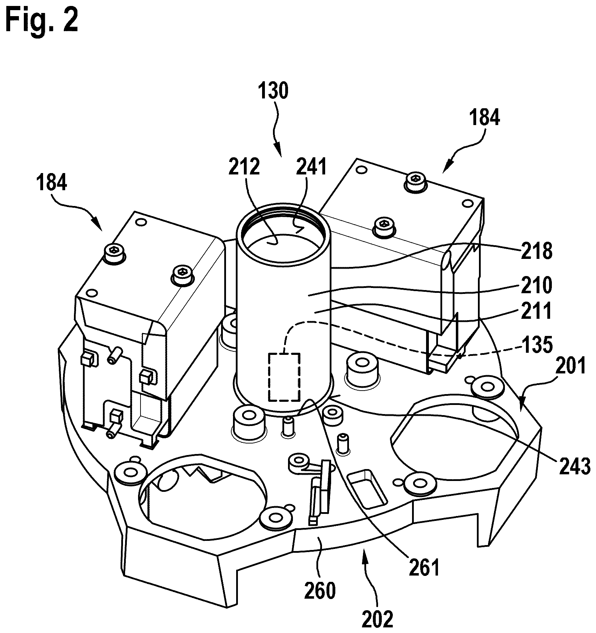

Fig. 2 zeigt eine dem Rotationslaser 100 von Fig. 1 zugeordnete Trägerplatte 260. Die Trägerplatte 260 ist bevorzugt im Gehäuse 110 des Rotationslasers 100 von Fig. 1 bewegbar gelagert. Die Trägerplatte 260 weist eine Oberseite 201 und eine Unterseite 202 auf. Beispielhaft ist auf der Oberseite 201 mindestens ein, illustrativ zwei Neigungssensoren 184 der Nivelliereinheit 180 von Fig. 1 angeordnet. Alternativ können drei Neigungssensoren 184 vorgesehen sein.

Des Weiteren zeigt Fig. 2 einen der Antriebseinheit 120 von Fig. 1 zugeordneten Stator 210. Der Stator 210 weist beispielhaft ein zylindrisches Trägerrohr 211 mit einer Innenaufnahme 212 auf. In der Innenaufnahme 212 ist vorzugsweise eine Lageranordnung zur Lagerung der Spindel 125 von Fig. 1 anordenbar. Bevorzugt weist die Lageranordnung zumindest ein Lagerelement auf. Zur Aufnahme des mindestens einen Lagerelements in der Innenaufnahme 212 weist die Innenaufnahme 212 zumindest eine Lagerstelle 241 auf. Darüber hinaus ist in der Innenaufnahme 212 des Trägerrohrs 211 zumindest abschnittsweise die Laserdiode 135 der Lasereinheit 130 von Fig. 1 angeordnet. Bevorzugt weist das Trägerrohr 211 an seinem Außenumfang 218 eine Anlagefläche 243 auf.

Des Weiteren weist die Trägerplatte 260 illustrativ eine Ausnehmung 261 auf. Vorzugsweise ist die Ausnehmung 261 als zentrale Ausnehmung 261 ausgebildet. Die Trägerplatte 260 ist vorzugsweise zur Anordnung des Trägerrohrs 211 des Stators 210 vorgesehen. Hierbei ist das Trägerrohr 211 vorzugsweise dazu ausgebildet, zumindest abschnittsweise in die Ausnehmung 261 der Trägerplatte 260 einzugreifen. Bevorzugt ist die Anlagefläche 243 des Trägerrohrs 211 in der Ausnehmung 261 angeordnet.

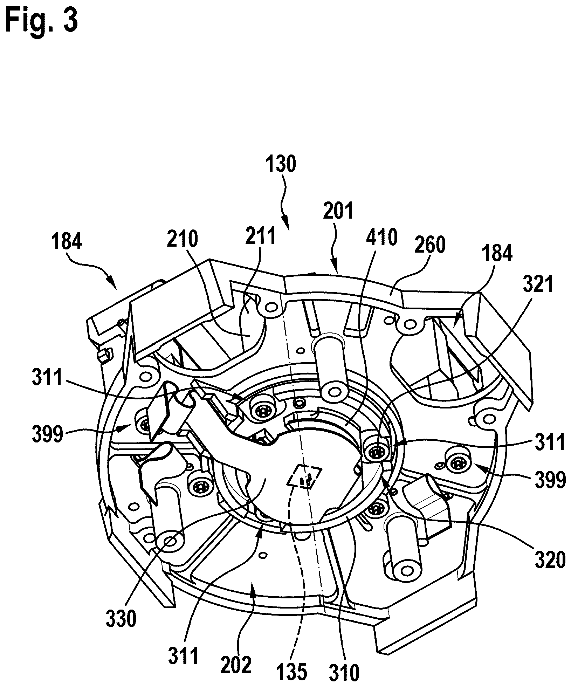

Fig. 3 zeigt die Trägerplatte 260 von Fig. 2 von der Unterseite 202 aus gesehen. Dabei verdeutlicht Fig. 3 einen dem Trägerrohr 211 des Stators 210 zugeordneten Umfangskragen 310. Der Umfangskragen 310 weist vorzugsweise einen größeren Durchmesser als die Ausnehmung 261 von Fig. 2 der Trägerplatte 260 auf. Der Umfangskragen 310 ist vorzugsweise mittels einer Schraubverbindung 320 mit der Trägerplatte 260 verbunden. Hierzu weist der Umfangskragen 310 zumindest ein, illustrativ drei Schraubenanordnungsstellen 311 auf, in denen jeweils eine Schraube 321 zur Ausbildung der Schraubverbindung 320 angeordnet ist.

Darüber hinaus ist der zumindest eine Neigungssensor 184 vorzugsweise mittels einer Schraubverbindung 399 an der Trägerplatte 260 fixiert. Illustrativ sind zwei Neigungssensoren 184 gezeigt, die mittels einer Schraubverbindung 399 an der Trägerplatte 260 fixiert sind. Hierbei ist eine Schraube zur Ausbildung der Schraubverbindung 399 auf der Unterseite 202 der Trägerplatte 260 angeordnet. Bevorzugt ist in der Innenaufnahme 212 von Fig. 2 des Trägerrohrs 210 abschnittsweise ein Laserdiodenhalter 410 angeordnet. Vorzugsweise ist dem Laserdiodenhalter 410 eine Leiterplatte 330 zugeordnet. Bevorzugt ist die Laserdiode 135 von Fig. 1 und Fig. 2 auf der Leiterplatte 330 angeordnet. Vorzugsweise ist die Leiterplatte 330 als flexible und faltbare Leiterplatte ausgebildet. Bevorzugt ist die Laserdiode 135 abschnittsweise im Laserdiodenhalter 410 und/oder der Innenaufnahme 212 des Trägerrohrs 210 angeordnet.

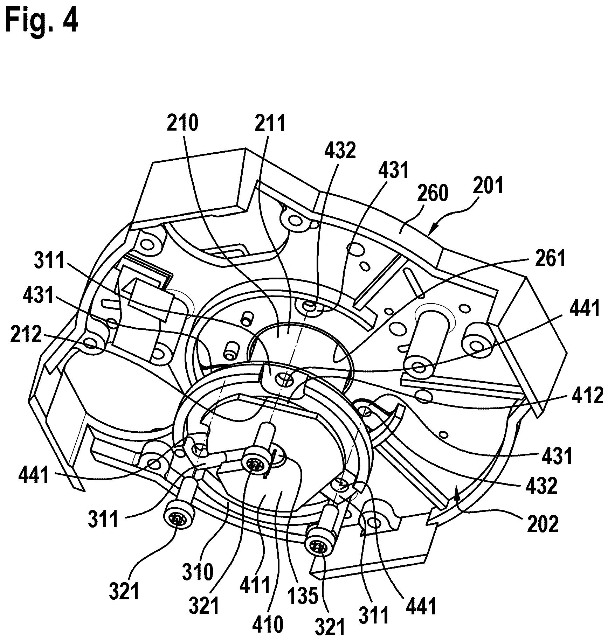

Fig. 4 zeigt die Trägerplatte 260 von Fig. 3 mit dem Stator 210, dem Laserdiodenhalter 410 und der Laserdiode 135 von Fig. 3. Dabei verdeutlicht Fig. 4 den Laserdiodenhalter 410, der einen zylindrischen Grundkörper 412 mit einem Umfangskragen 411 aufweist. Der zylindrische Grundkörper 412 ist dabei in der Innenaufnahme 212 des Trägerrohrs 211 anordenbar und in Fig. 4 illustrativ darin angeordnet. Vorzugsweise ist der zylindrische Grundkörper 412 in die Innenaufnahme 212 des Trägerrohrs 211 eingepresst.

Des Weiteren zeigt Fig. 4 eine einer der Schraubenanordnungsstellen 311 des Umfangskragens 310 zugeordnete Ausnehmung 441 zur Anordnung einer Schraube 321. Darüber hinaus weist die Trägerplatte 260 an ihrer Unterseite 202 eine der Ausnehmung 441 zugeordnete Ausnehmung 432 auf. Der Ausnehmung 432 ist eine Füge-Fläche 431 zugeordnet. Die Füge-Fläche 431 ist vorzugsweise als plane Fläche ausgebildet. Bevorzugt ist die Füge-Fläche 431 parallel zur Unterseite 202 der Trägerplatte 260 angeordnet. Hierzu ist die Füge-Fläche 431 stegartig ausgebildet.

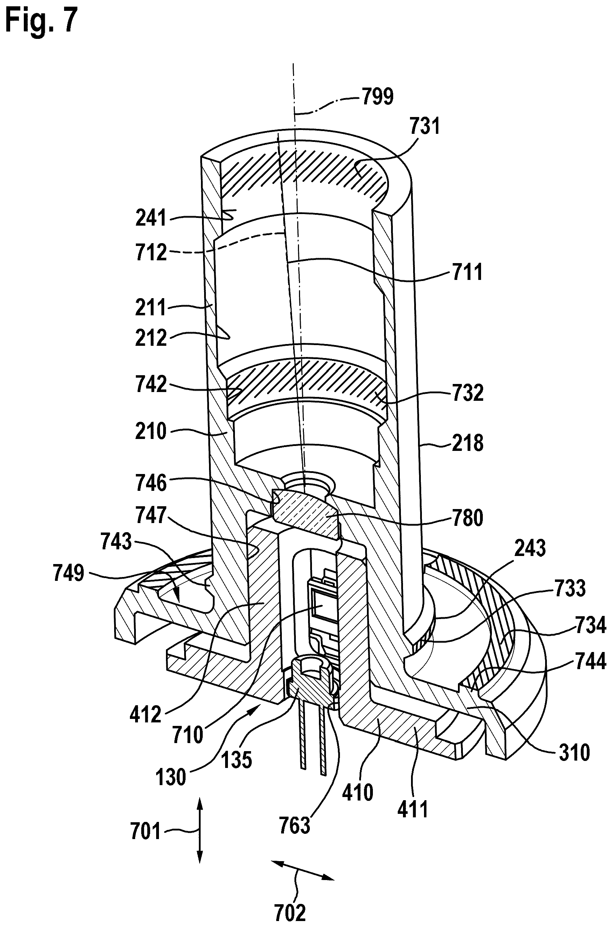

Der Umfangskragen 310 des Trägerrohrs 211 weist vorzugsweise an seiner der Trägerplatte 260 zugewandten Seite (749 in Fig. 7) eine weitere Füge-Fläche (734 in Fig. 7) auf. Vorzugsweise sind die beiden Füge-Flächen 431, (734 in Fig. 7) planparallel zueinander angeordnet. Unter dem Begriff "planparallel" wird im Kontext der vorliegenden Erfindung eine exakt parallele Anordnung mit einer vergleichsweise geringen Toleranz der beiden Füge-Flächen zueinander verstanden. Die beiden Füge-Flächen 431, (734 in Fig. 7) werden bevorzugt durch Plandrehen, Planfräsen oder Planschleifen ausgebildet.

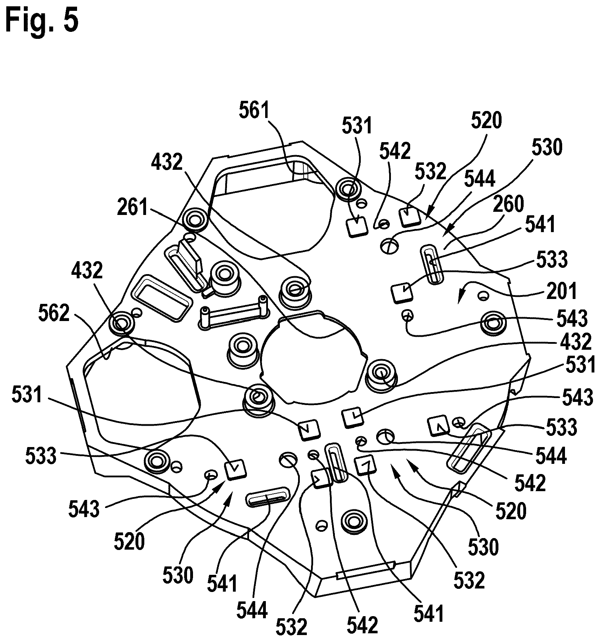

Fig. 5 zeigt die Trägerplatte 260 von Fig. 2 bis Fig. 4 von der Oberseite 201 aus gesehen. Die Trägerplatte 260 weist zumindest eine, illustrativ drei Montagestellen 530 zur Anordnung des Neigungssensors 184 von Fig. 1 bis Fig. 4 auf. Jede Montagestelle 530 weist vorzugsweise eine Füge-Fläche 520 auf. Die Füge-Fläche 520 ist vorzugsweise als plane Fläche ausgebildet. Bevorzugt ist die Füge-Fläche 520 parallel zur Oberseite 201 der Trägerplatte 260 angeordnet. Hierzu ist die Füge-Fläche 520 stegartig ausgebildet.

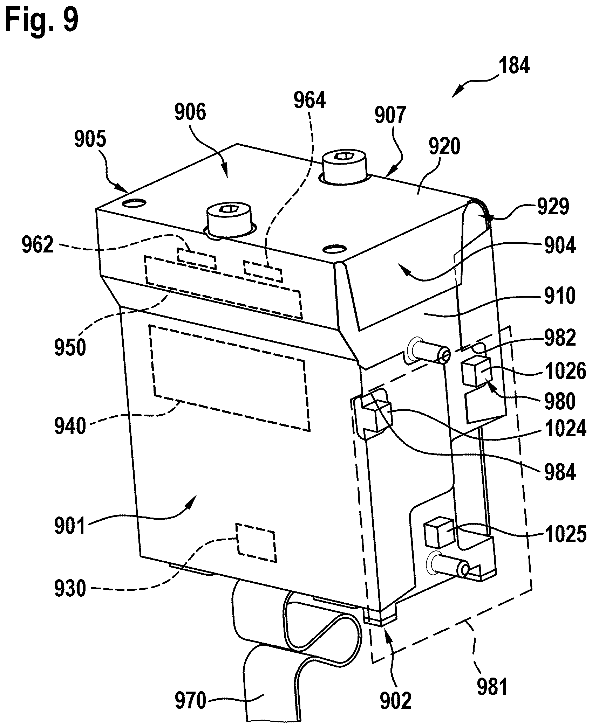

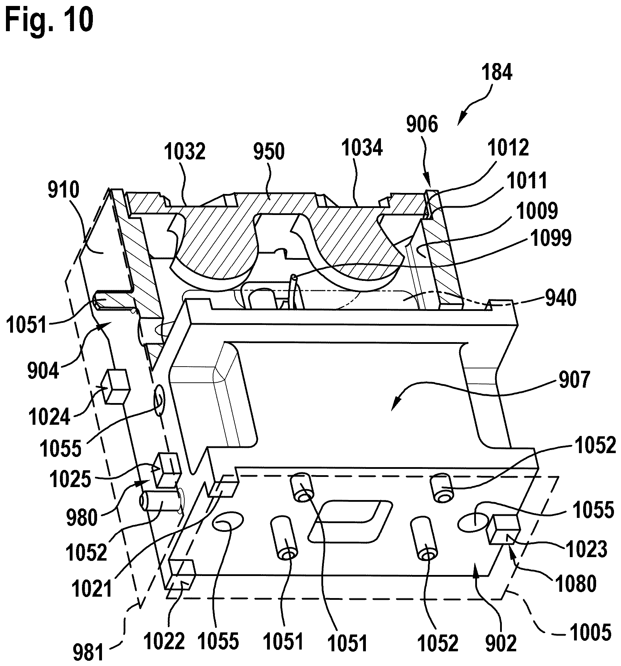

Bevorzugt sind die drei Montagestellen 530, bzw. die drei Füge-Flächen 520, in einer gemeinsamen Ebene angeordnet. Alternativ weist jede Füge-Fläche 520 eine zugeordnete Ebene auf. Vorzugsweise weist jede Füge-Fläche 520 zumindest zwei, illustrativ drei Teilbereiche 531, 532, 533 auf. Bevorzugt sind die illustrativ drei Teilbereiche 531, 532, 533 in einem Dreieck angeordnet. Bevorzugt ist eine Ausnehmung 544 zum Fixieren des Neigungssensors 184 innerhalb des Dreiecks angeordnet. Hierbei kann die Ausnehmung 544 z.B. im Schwerpunkt des Dreiecks angeordnet sein. Des Weiteren sind jeder Montagestelle 530 vorzugsweise zwei Aufnahmen 542, 543 zur Aufnahme von Zentrierstiften (1051, 1052 in Fig. 10) des Neigungssensors 184 zugeordnet. Darüber hinaus ist jeder Montagestelle 530 illustrativ eine schlitzförmige Ausnehmung 541 zum Durchführen einer Leiterplatte (970 in Fig. 9) des Neigungssensors 184 zugeordnet.

Des Weiteren verdeutlicht Fig. 5 die bevorzugt zentrale Ausnehmung 261 der Trägerplatte 260 zum Anordnen des Stators 210 sowie die vorzugsweise drei Ausnehmungen 432 zum Fixieren des Umfangskragens 310 des Trägerrohrs 211 des Stators 210 von Fig. 2 bis Fig. 4. Darüber hinaus weist die Trägerplatte 260 vorzugsweise zwei Aufnahmen 561, 562 auf, die zur Aufnahme jeweils eines Neigungseinstellmotors 182 der Nivelliereinheit 180 von Fig. 1 ausgebildet sind.

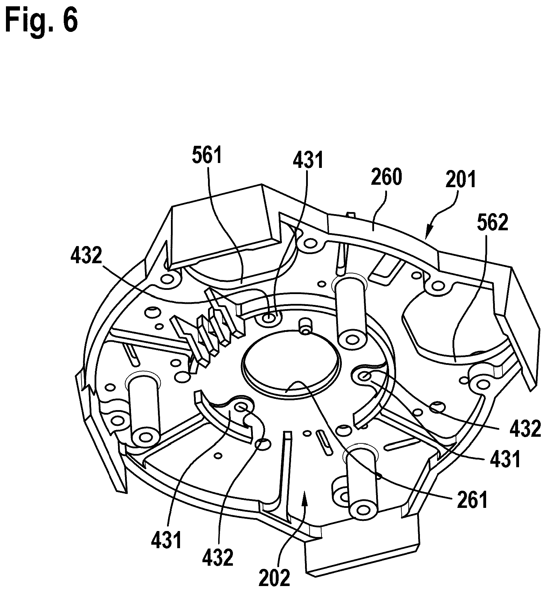

Fig. 6 zeigt die Trägerplatte 260 von Fig. 2 bis Fig. 5 von der Unterseite 202 aus gesehen. Dabei verdeutlicht Fig. 6 die illustrativ drei Füge-Flächen 431 mit den zugeordneten Ausnehmungen 432. Bevorzugt sind die Füge-Flächen 431 an der Unterseite 202 der Trägerplatte 260 planparallel zu den Füge-Flächen 520 von Fig. 5 an der Oberseite 201 der Trägerplatte 260 angeordnet. Vorzugsweise sind die Füge-Flächen 431, 520 auf erhobenen Abschnitten der Trägerplatte 260 ausgebildet und durch Planfräsen, Plandrehen oder Planschleifen gefertigt.

Fig. 7 zeigt den Stator 210 von Fig. 2 bis Fig. 4 mit dem Trägerrohr 211 und den abschnittsweise im Trägerrohr 211 angeordneten Laserdiodenhalter 410 von Fig. 4 mit der Laserdiode 135, einer Fotodiode 710 sowie einer Kollimationslinse 780. Die Laserdiode 135 und/oder die Fotodiode 710 sind zumindest abschnittsweise in einer Innenaufnahme 763 des Laserdiodenhalters 410 angeordnet. Des Weiteren ist der Laserdiodenhalter 410 abschnittsweise in einer der Innenaufnahme 212 des Trägerrohrs 211 zugeordneten, illustrativ unteren Aufnahme 747 angeordnet.

Der Laserdiode 135 ist vorzugsweise eine Monitordiode zugeordnet. Die Monitordiode ist vorzugsweise zur Messung einer der Laserdiode 135 zugeordneten Laserleistung ausgebildet. Hierbei kann die Monitordiode eine in die Laserdiode 135 integrierte Monitordiode sein. Bevorzugt weist die Lasereinheit 130 die Fotodiode 710 auf, die für eine von der Monitordiode unabhängige Messung der Laserleistung vorgesehen ist. Illustrativ ist die Fotodiode 710 senkrecht zur Laserdiode 135 angeordnet.

Zur Kollimation des Laserstrahls weist die Lasereinheit 130 vorzugsweise die Kollimationslinse 780 auf. Hierbei ist die Kollimationslinse 780 bevorzugt in einem Aufnahmeabschnitt 746 der Innenaufnahme 212 des Stators 210 angeordnet und bevorzugt fixiert. Die Kollimationslinse 780 ist vorzugsweise mittels einer stoffschlüssigen Verbindung und/oder einer Pressverbindung in der Innenaufnahme 212, bzw. dem Aufnahmeabschnitt 746, fixiert.

Ein durch die Laserdiode 135 erzeugter und durch die Kollimationslinse 780 kollimierter Laserstrahl 711 sowie eine dem Laserstrahl 711 zugeordnete Laserachse 712 sind illustrativ nicht deckungsgleich mit einer Drehachse 799 der Spindel 125 von Fig. 1 bzw. des Trägerrohrs 211 angeordnet, sondern beispielhaft schräg hierzu gestellt. Eine derartige Schrägstellung und/oder ein seitlicher Versatz kann bei der Montage der Laserdiode 135 im Laserdiodenhalter 410, der Montage des Laserdiodenhalters 410 im Trägerrohr 211 und/oder bei der Montage der Kollimationslinse 780 im Trägerrohr 211 auftreten.

Um die Schrägstellung und/oder den seitlichen Versatz des Laserstrahls 711 zur Drehachse 799 innerhalb vorgegebener Toleranzen auszugleichen, bzw. zum deckungsgleichen Ausrichten der Drehachse 799 der Spindel 125 von Fig. 1 zum Laserstrahl 711 der Laserdiode 135, ist das Trägerrohr 211 bevorzugt mittels Justierdrehen bearbeitet.

In einem konventionellen Drehprozess wird ein Werkstück auf eine Spindel gespannt, die ortsfest ist und lediglich eine Rotation ausführen kann. Daher können nur rotationssymmetrische Geometrien erzeugt werden bzw. spiralförmige, beispielsweise Gewinde. Beim Justierdrehen kann die Spindel zusätzlich eine Seitwärtsbewegung ausführen. Die unterschiedlichen Bewegungen z.B. Rotation, Seitwärtsbewegung der Spindel, Vorschub des Werkzeugs, können über einen Computer präzise gesteuert werden. Auf diese Weise können "unrunde" Konturen erzeugt werden. Diese Fähigkeit ermöglicht die Korrektur einer schrägen Laserachse, wie beispielhaft der Laserachse 712.

Wie zuvor beschrieben, sind in der Innenaufnahme 212 des Trägerrohrs 211 mindestens ein, illustrativ zwei Lagerstellen 241, 742 zur Anordnung von Lagerelementen zum drehbeweglichen Lagern der Spindel 125 von Fig. 1 vorgesehen. Vorzugsweise ist das Trägerrohr 211 an zumindest einer der mindestens zwei Lagerstellen 241, 742 zur konzentrischen Ausrichtung der Spindel 125 zum Laserstrahl 711 mittels Justierdrehen bearbeitet. Bevorzugt bildet die Lagerstelle 241 eine Füge-Fläche 731 und die Lagerstelle 742 eine Füge-Fläche 732 aus, die zur Anordnung von mindestens einem Lagerelement zum drehbeweglichen Lagern der Spindel 125 vorgesehen sind. Bevorzugt sind die Füge-Flächen 731, 732 als zylindrische Flächen ausgebildet.

Des Weiteren weist das Trägerrohr 211 vorzugsweise am Außenumfang 218 eine Füge-Fläche 733 und/oder an einer Oberseite 749 des Umfangskragens 310 eine Füge-Fläche 734 auf. Die Füge-Fläche 733 ist vorzugsweise der Anlagefläche 243 zugeordnet und beispielhaft in der Ausnehmung 261 von Fig. 2 und Fig. 4 bis Fig. 6 der Trägerplatte 260 von Fig. 2 bis Fig. 6 anordenbar. Bevorzugt ist die Füge-Fläche 734 an der Unterseite 202 von Fig. 2 bis Fig. 6 der Trägerplatte 260 von Fig. 2 bis Fig. 6 anordenbar. Vorzugsweise liegt die Füge-Fläche 734 des Trägerohrs 211 an der zumindest einen Füge-Fläche 431 der Trägerplatte 260 im montierten Zustand des Trägerrohrs 211 an der Trägerplatte 260, an der Trägerplatte 260 an. Hierbei verbindet die Schraubverbindung 320 von Fig. 3 die zumindest eine Füge-Fläche 431 der Trägerplatte 260 und die zumindest eine Füge-Fläche 734 des Trägerrohrs 211 planparallel miteinander.

Bevorzugt ist die Füge-Fläche 733 als zylindrische Fläche ausgebildet. Vorzugsweise ist die Füge-Fläche 734 als plane Fläche ausgebildet. Eine den als zylindrische Flächen ausgebildeten Füge-Flächen 731, 732, 733 zugeordnete Zylinderachse ist vorzugsweise senkrecht zu einer als plane Fläche ausgebildeten Füge-Fläche 734 ausgerichtet.

Die Füge-Fläche 733 ist vorzugsweise als stegartige Erweiterung 743 am Außenumfang 218 des Trägerrohrs 211 ausgebildet. Hierbei ist die stegartige

Erweiterung 743 bevorzugt in radialer Richtung 702 des Trägerrohrs 211 angeordnet. Die Füge-Fläche 734 ist bevorzugt als stegartige Erweiterung 744 des Umfangskragens 310 des Trägerrohrs 211 ausgebildet. Hierbei ist die stegartige Erweiterung 744 bevorzugt in axialer Richtung 701 bzw. entlang der Längserstreckung des Trägerrohrs 211 angeordnet.

Alternativ, oder optional, ist das Trägerrohr 211 an der Füge-Fläche 733 zur zentrischen Ausrichtung der Spindel 125 bzw. des Laserstrahls 711 relativ zur Trägerplatte 260 von Fig. 2 bis Fig. 6 mittels Justierdrehen bearbeitet. Alternativ, oder optional, ist das Trägerrohr 211 an der Füge-Fläche 734 zur orthogonalen Ausrichtung der Spindel 125 bzw. des Laserstrahls 711 relativ zur Trägerplatte 260 mittels Justierdrehen bearbeitet.

Vorzugsweise wird bei einem Justierdrehen des Stators 210, bzw. des Trägerrohrs 211, mindestens eine der dem Trägerrohr 211 zugeordneten Flächen 731, 732, 733, 734 beruhend auf einer durch die Laserachse 712 definierte, virtuelle Drehachse bearbeitet, insbesondere zerspanend bearbeitet. Hierbei bildet bevorzugt mindestens eine der Lagerstellen 241, 742 eine derartige zugeordnete Fläche aus. Alternativ, oder optional, bildet eine der zwei Füge-Flächen 733, 734 eine derartige zugeordnete Fläche aus. Durch die Bearbeitung des Trägerrohrs 210 entlang der virtuellen Drehachse wird bevorzugt zumindest eine der zugeordneten Flächen 731, 732, 733, 734 derart bearbeitet, dass die Drehachse 799 der Spindel 125 deckungsgleich mit dem Laserstrahl 711 angeordnet ist.

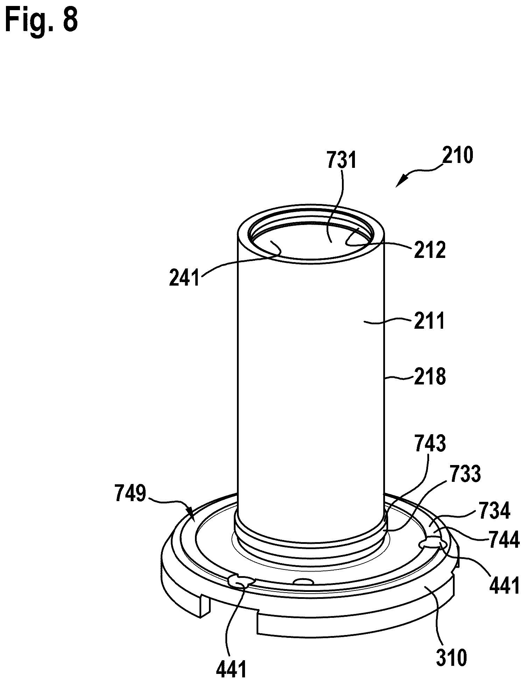

Fig. 8 zeigt den Stator 210 von Fig. 7 mit den Füge-Flächen 731, 733, 734. Dabei verdeutlicht Fig. 8 die am Außenumfang 218 des Trägerrohrs 211 angeordnete stegartige Erweiterung 743 zur Ausbildung der Füge-Fläche 733 und die am Umfangskragen 310 des Trägerrohrs 211 angeordnete stegartige Erweiterung 744 zur Ausbildung der Füge-Fläche 734.

Fig. 9 zeigt den Neigungssensor 184 von Fig. 1 bis Fig. 4. Der Neigungssensor 184 weist ein im Gehäuse 110 des Rotationslasers 100 von Fig. 1 angeordnetes Neigungssensor-Modulgehäuse 910 auf. Das Neigungssensor-Modulgehäuse 910 weist vorzugsweise einen zumindest annähernd quaderförmigen Grundkörper mit einer ersten, illustrativ rechten Seitenfläche 904, einer senkrecht zur ersten Seitenfläche 904 angeordneten zweiten, illustrativ unteren

Seitenfläche 902, sowie einer dritten, illustrativ hinteren Seitenfläche 907 und einer der dritten Seitenfläche 907 gegenüberliegenden vierten Seitenfläche 901 auf. Des Weiteren ist eine fünfte, illustrativ linke Seitenfläche 905 gegenüberliegend zur ersten Seitenfläche 904 vorgesehen sowie eine der zweiten Seitenfläche 902 gegenüberliegende Oberseite 906.

An einem Außenumfang 929 des Neigungssensor-Modulgehäuses 910 ist vorzugsweise eine Infrarot-Abschirmung 920 angeordnet. Bevorzugt ist die Infrarot-Abschirmung 920 zumindest abschnittsweise an dem Neigungssensor-Modulgehäuse 910 angeordnet. Die Infrarot-Abschirmung 920 weist eine Undurchlässigkeit für Wellenlängen im Infrarot-Frequenzband auf, sodass Wellenlängen im Infrarot-Frequenzband das Neigungssensor-Modulgehäuse 910 nicht verlassen können. Beispielsweise kann die Infrarot-Abschirmung 920 als aluminiumkaschierte Klebefolie ausgebildet sein. Alternativ ist die Infrarot-Abschirmung 920 als Stanzbiegeteil ausgebildet. Hierbei umgreift die Infrarot-Abschirmung 920 das Neigungssensor-Modulgehäuse 910 bevorzugt abschnittsweise. Illustrativ ist die Infrarot-Abschirmung 920 um das Neigungssensor-Modulgehäuse 910 gebogen. Vorzugsweise ist die Infrarot-Abschirmung 920 zumindest an der dritten und/oder vierten Seitenfläche 907, 901 angeordnet. Illustrativ ist die Infrarot-Abschirmung 920 zumindest abschnittsweise an der Seitenfläche 901, 904, 905, 907 und der Oberseite 906 angeordnet.

Beispielhaft weist die Infrarot-Abschirmung 920 zumindest eine Ausnehmung 982, 984 auf. Die Ausnehmungen 982, 984 sind vorzugsweise dazu ausgebildet, ein Durchgreifen von dem Neigungssensor-Modulgehäuse 910 zugeordneten Teilen zu ermöglichen.

Das Neigungssensor-Modulgehäuse 910 weist vorzugsweise an zumindest einer Seitenfläche 902, 904 mindestens eine Füge-Fläche 980, 1080 in Fig. 10 zur plangenauen Ausrichtung des Neigungssensor-Modulgehäuses 910 auf der Trägerplatte 260 von Fig. 2 bis Fig. 6 auf. Vorzugsweise ist die mindestens eine Füge-Fläche 980, 1080 in Fig. 10 planparallel zu einer Füge-Fläche 520 von Fig. 5 der Trägerplatte 260 von Fig. 2 bis Fig. 6. Hierdurch kann eine präzise Anordnung des Neigungssensors 184 zur Lasereinheit 130 von Fig. 1 ermöglicht werden, wodurch eine exakte und präzise Messung einer Neigung der Lasereinheit 130 von Fig. 1 ermöglicht werden kann.

Die mindestens eine Füge-Fläche 980, 1080 in Fig. 10 ist bevorzugt in zumindest zwei voneinander beabstandete Teilflächen 1024, 1025, 1026, (1021, 1022, 1023 in Fig. 10) aufgeteilt. Hierbei sind die zumindest zwei voneinander beabstandeten Teilflächen 1024, 1025, 1026, (1021, 1022, 1023 in Fig. 10) in einer gemeinsamen Ebene 981 (und 1005 in Fig. 10) angeordnet.

Illustrativ sind die Teilflächen 1024, 1025, 1026 der Ebene 981 zugeordnet, die parallel zu der illustrativ rechten Seitenfläche 904 des Neigungssensor-Modulgehäuses 910 angeordnet ist. Die Seitenfläche 902 ist vorzugsweise senkrecht zur Seitenfläche 904 angeordnet.

Illustrativ durchgreifen die Teilflächen 1024, 1025 des Neigungssensor-Modulgehäuses 910 die Ausnehmungen 982, 984 der Infrarot-Abschirmung 920. Insbesondere sind die Ausnehmungen 982, 984 bevorzugt zumindest einer dem Neigungssensor-Modulgehäuse 910 zugeordneten, mindestens einen Füge-Fläche 980 zugeordnet. Die Füge-Fläche 980 ist vorzugsweise als plane Fläche ausgebildet. Hierbei kann die Füge-Fläche 980 parallel zur Seitenfläche 904 des Neigungssensor-Modulgehäuses 910 angeordnet sein. Hierzu ist die Füge-Fläche 980 stegartig ausgebildet. Vorzugsweise ist das Neigungssensor-Modulgehäuse 910 als Gussteil ausgebildet. Es wird darauf hingewiesen, dass die mindestens eine Füge-Fläche 980, 1080 in Fig. 10 eine Ausformschräge des als Gussteil ausgebildeten Neigungssensor-Modulgehäuses 910 ist und durch Plandrehen, Planfräsen oder Planschleifen ausgebildet werden kann.

In dem Neigungssensor-Modulgehäuse 910 sind zur Ermittlung einer Ausrichtung der Lasereinheit 130 von Fig. 1 vorzugsweise eine Röhrenlibelle 940 und ein Infrarot-Emitter 930 angeordnet. Vorzugsweise ist in dem Neigungssensor-Modulgehäuse 910 ein von der Röhrenlibelle 940 beabstandeter Lichtleiter 950 angeordnet. Die zweite Seitenfläche 902 ist beispielhaft parallel zu einem Lichtleiter 950 angeordnet. Darüber hinaus weist der Neigungssensor 184 in seinem Neigungssensor-Modulgehäuse 910 bevorzugt mindestens eine Fotodiode 962, 964 auf. Illustrativ sind zwei Fotodioden 962, 964 vorgesehen.

Der Lichtleiter 950 weist vorzugsweise Glas oder transparenten Kunststoff auf. Beispielhaft ist der Lichtleiter 950 aus Glas oder transparentem Kunststoff gefertigt. Vorzugsweise ist der Lichtleiter 950 am Neigungssensor-Modulgehäuse 910 fixiert. Hierbei ist der Lichtleiter 950 z.B. mittels einer Schraubverbindung am Neigungssensor-Modulgehäuse 910 fixiert. Alternativ oder optional ist der Lichtleiter 950 z.B. mittels einer Klebverbindung am Neigungssensor-Modulgehäuse 910 fixiert. Gemäß einer Ausführungsform ist der Lichtleiter 950 einstückig mit dem Neigungssensor-Modulgehäuse 910 ausgebildet.

Des Weiteren weist der Neigungssensor 184 vorzugsweise eine flexible Leiterplatte 970 auf. Bevorzugt sind der Infrarot-Emitter 930 und die mindestens eine Fotodiode 962, 964 auf der flexiblen Leiterplatte 970 angeordnet. Die flexible Leiterplatte 970 ist vorzugsweise am Außenumfang 929 des Neigungssensor-Modulgehäuses 910 angeordnet. Hierbei umgreift die flexible Leiterplatte 970 das Neigungssensor-Modulgehäuse 910 bevorzugt zumindest abschnittsweise. Die flexible Leiterplatte 970 ist dabei z.B. abschnittsweise zwischen dem Neigungssensor-Modulgehäuse 910 und der Infrarot-Abschirmung 920 angeordnet.

Fig. 10 zeigt den Neigungssensor 184 von Fig. 9. Wie oben beschrieben, weist das Neigungssensor-Modulgehäuse 910 vorzugsweise an zumindest einer Seitenfläche 902, 904 mindestens eine Füge-Fläche 980, 1080 zur plangenauen Ausrichtung des Neigungssensor-Modulgehäuses 910 auf der Trägerplatte 260 von Fig. 2 bis Fig. 6 auf. Die mindestens eine Füge-Fläche 980, 1080 ist bevorzugt in zumindest zwei voneinander beabstandete Teilflächen 1024, 1025, 1026 in Fig. 9, 1021, 1022, 1023 aufgeteilt. Hierbei können die zumindest zwei voneinander beabstandeten Teilflächen 1024, 1025, 1026 in Fig. 9, 1021, 1022, 1023 in einer gemeinsamen Ebene 981, 1005 angeordnet sein.

Illustrativ sind die der Füge-Fläche 1080 zugeordneten Teilflächen 1021, 1022, 1023 der Ebene 1005 zugeordnet, die parallel zu der illustrativ unteren Seitenfläche 902 des Neigungssensor-Modulgehäuses 910 angeordnet ist. Die Füge-Fläche 1080 ist vorzugsweise als plane Fläche ausgebildet. Bevorzugt ist die Füge-Fläche 1080 parallel zur Seitenfläche 902 des Neigungssensor-Modulgehäuses 910 angeordnet. Hierzu ist die Füge-Fläche 1080 vorzugsweise stegartig ausgebildet.

Bevorzugt ist der Seitenfläche 904 und/oder der Seitenfläche 902 zumindest ein Zentrierstift 1051, 1052 zugeordnet. Die Zentrierstifte 1051, 1052 sind dazu ausgebildet, den Neigungssensor 184 eindeutig und wiederholbar auf der Trägerplatte 260 von Fig. 2 bis Fig. 6 zu positionieren. Illustrativ sind jeweils zwei Zentrierstifte 1051, 1052 der Seitenfläche 902 zugeordnet und der Seitenfläche 904 ist jeweils ein Zentrierstift 1051, 1052 zugeordnet. Darüber hinaus weist die Seitenfläche 902 und/oder die Seitenfläche 904 bevorzugt zumindest eine Ausnehmung 1055 zur Fixierung auf der Trägerplatte 260 von Fig. 2 bis Fig. 6 auf.

Vorzugsweise ist in einer Innenaufnahme 1009 des Neigungssensor-Modulgehäuses 910 die Röhrenlibelle 940 angeordnet. Zur Positionierung der Röhrenlibelle 940 in der Innenaufnahme 1009 des Neigungssensor-Modulgehäuses 910 ist illustrativ ein federndes Element 1099 vorgesehen. Das federnde Element 1099 beaufschlagt die Röhrenlibelle 940 dabei vorzugsweise an ihrem Außenumfang in eine vorgegebene Position. Beispielhaft ist das federnde Element 1099 als Drahtfeder oder Blattfeder ausgebildet.

Bevorzugt ist die Röhrenlibelle 940 in der Innenaufnahme 1009 des Neigungssensor-Modulgehäuses 910 durch eine Klebverbindung fixiert. Vorzugsweise ist ein die Klebverbindung ausbildendes Klebmittel mittels UV-Licht aushärtbar. Gemäß einer Ausführungsform weist das Neigungssensor-Modulgehäuse 910 an der Seitenfläche 901 oder an der Oberseite 906 einen UV-Licht-Einbringbereich 1012 zum Aushärten des Klebmittels, das die Röhrenlibelle 940 im Neigungssensor-Modulgehäuse 910 fixiert, auf. Hierbei wird das Klebmittel z.B. mittels einer UV-Lampe ausgehärtet.

Darüber hinaus ist der Lichtleiter 950 illustrativ in einer der Innenaufnahme 1009 zugeordneten und der Oberseite 906 des Neigungssensor-Modulgehäuses 910 zugewandten Aufnahme 1011 aufgenommen. Vorzugsweise weist der Lichtleiter 950 an seiner von der Röhrenlibelle 940 abgewandten Seite, bzw. der Oberseite 906 zugewandten Seite, mindestens eine Aufnahme 1032, 1034 zur Aufnahme von mindestens einer Fotodiode 962, 964 von Fig. 9 auf. Illustrativ ist die Aufnahme 1032 zur Aufnahme der Fotodiode 962 von Fig. 9 und die Aufnahme 1034 zur Aufnahme der Fotodiode 964 von Fig. 9 vorgesehen. Alternativ können auch mehrere Fotodioden 962, 964 von Fig. 9 in einer gemeinsamen Aufnahme 1032, 1034 anordenbar sein.

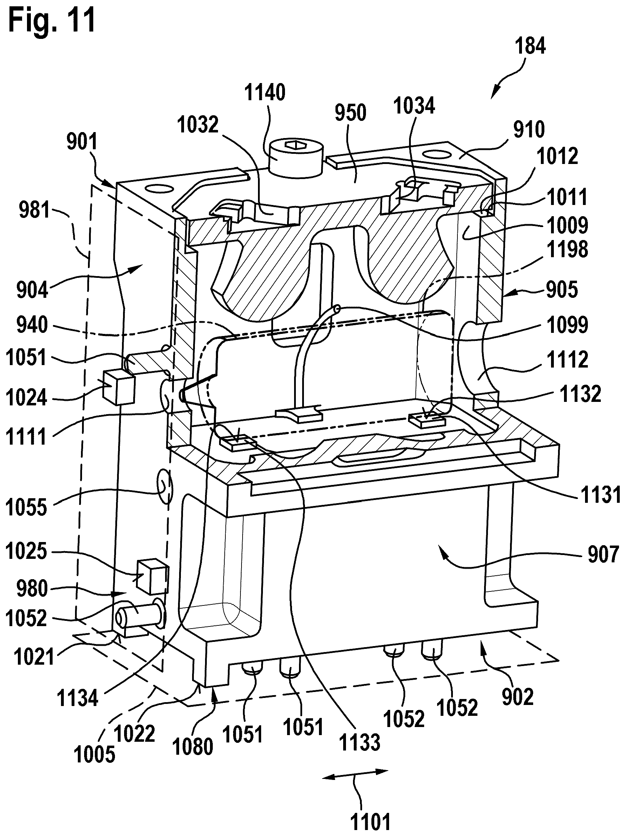

Fig. 11 zeigt den Neigungssensor 184 von Fig. 1 bis Fig. 4, Fig. 9 und Fig. 10. Dabei verdeutlicht Fig. 11 die Anordnung des Lichtleiters 950 in der Aufnahme 1011 des Neigungssensor-Modulgehäuses 910. Illustrativ ist der Lichtleiter 950 mittels zumindest einer Schraube 1140 am Neigungssensor-Modulgehäuse 910 fixiert. Alternativ ist der Lichtleiter 950 mittels einer Klebverbindung am Neigungssensor-Modulgehäuse 910 fixiert. Jedoch kann der Lichtleiter 950 auch lediglich durch ein Anordnen in der Aufnahme 1011 des Neigungssensor-Modulgehäuses 910 im Neigungssensor-Modulgehäuse 910 fixiert sein, da die Aufnahme 1011 sich zur Röhrenlibelle 940 hin, bzw. illustrativ nach unten, in die Innenaufnahme 1009 des Neigungssensor-Modulgehäuses 910 verjüngt.

Des Weiteren zeigt Fig. 11 die Anordnung der Röhrenlibelle 940 in der Innenaufnahme 1009 des Neigungssensor-Modulgehäuses 910. Die Röhrenlibelle 940 ist bevorzugt auf zumindest einem, illustrativ auf zwei Lagerungselementen 1131, 1133 in der Innenaufnahme 1009 gelagert. Hierbei weist das zumindest eine Lagerungselement 1031, 1033 bevorzugt mindestens eine Füge-Fläche 1132, 1134 auf. Illustrativ weist das Lagerungselement 1031 die Füge-Fläche 1132 auf und das Lagerungselement 1133 die Füge-Fläche 1134. Die Röhrenlibelle 940 liegt vorzugsweise mit ihrem Außenumfang 1198 auf den Füge-Flächen 1132, 1134 auf. Die Füge-Flächen 1132, 1134 sind vorzugsweise als plane Flächen ausgebildet.

Darüber hinaus weist das Neigungssensor-Modulgehäuse 910 an der illustrativ linken Seitenfläche 904 und an der illustrativ rechten Seitenfläche 905 vorzugsweise jeweils eine Ausnehmung 1111, 1112 zum Verschieben der Röhrenlibelle 940 entlang ihrer Längserstreckung 1101 auf. Hierbei ist die Seitenfläche 905 beispielhaft gegenüberliegend zur Seitenfläche 904. Die Ausnehmung 1111 ist dabei der illustrativ linken Seitenfläche 904 zugeordnet und die Ausnehmung 1112 ist der illustrativ rechten Seitenfläche 905 zugeordnet.

Vorzugsweise ist die zumindest eine Füge-Fläche 1132, 1134 planparallel zu der zumindest einen Füge-Fläche 980 angeordnet. Alternativ ist die zumindest eine Füge-Fläche 1132, 1134 orthogonal zu der zumindest einen Füge-Fläche 1080 angeordnet.

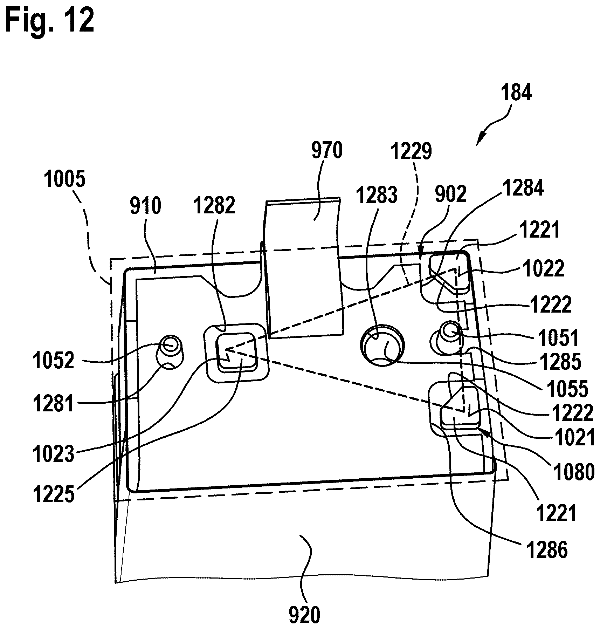

Fig. 12 zeigt den Neigungssensor 184 von Fig. 1 bis Fig. 4, Fig. 9 bis Fig. 11 und verdeutlicht die Seitenfläche 902 mit der Füge-Fläche 1080. Gemäß Fig. 12 sind die vorzugsweise drei Teilflächen 1021, 1022, 1023 in einem Dreieck 1229 angeordnet. Bevorzugt weist die illustrativ linke Teilfläche 1023 eine rechteckige Grundfläche 1225 auf. Vorzugsweise weisen die Teilflächen 1021, 1022 ebenfalls eine rechteckige Grundfläche 1221 auf. Bevorzugt weisen die Grundflächen 1221 der Teilflächen 1021, 1022 jeweils eine Abflachung 1222 auf. Die Abflachung 1222 ist dabei vorzugsweise einem Schwerpunkt des Dreiecks 1229 zugewandt angeordnet.

Die Leiterplatte 970 weist bevorzugt eine der Ausnehmung 1055 zugeordnete Ausnehmung 1283 auf. Somit kann zwischen der Ausnehmung 1055 des Neigungssensor-Modulgehäuses 910 und der Ausnehmung 544 von Fig. 5 der Trägerplatte 260 von Fig. 2 bis Fig. 6 eine Schraubverbindung zur Fixierung des Neigungssensors 184 an der Trägerplatte 260 ausgebildet werden. Vorzugsweise weist die Leiterplatte 970 den Teilflächen 1021, 1022, 1023 zugeordnete Ausnehmungen 1282, 1284, 1286 auf, wobei die Ausnehmung 1282 der Teilfläche 1023 zugeordnet ist, die Ausnehmung 1284 der Teilfläche 1022 und die Ausnehmung 1286 der Teilfläche 1021. Darüber hinaus weist die Leiterplatte 970 illustrativ den Zentrierstiften 1051, 1052 des Neigungssensor-Modulgehäuses 910, insbesondere der Füge-Fläche 1080 der Seitenfläche 902, zugeordnete Ausnehmungen 1281, 1285 auf. Die Ausnehmung 1281 ist vorzugsweise dem Zentrierstift 1052 zugeordnet und die Ausnehmung 1285 dem Zentrierstift 1051.

## Patentansprüche

1. Rotationslaser (100) mit einem Gehäuse (110), in dem eine Antriebseinheit (120) mit einem Stator (210) und einem Rotor zum rotierenden Antreiben einer Spindel (125) angeordnet ist, wobei der Stator (210) ein Trägerrohr (211) aufweist, welches an einer gegenüber dem Gehäuse (110) verschwenkbaren Trägerplatte (260) angeordnet ist, wobei mindestens ein Neigungssensor (184) zur Detektion einer Neigung der Trägerplatte (260) im Gehäuse (110) angeordnet ist, und wobei eine Lasereinheit (130) mit einer Laserdiode (135) vorgesehen ist, wobei die Laserdiode (135) zumindest abschnittsweise in dem Trägerrohr (211) angeordnet ist, und wobei der mindestens eine Neigungssensor (184) auf einer von der Laserdiode (135) abgewandten Oberseite (201) der Trägerplatte (260) angeordnet ist, **dadurch gekennzeichnet, dass** eine Vielzahl von Füge-Flächen (431; 520; 731, 732, 733, 734; 980; 1080; 1132, 1134) zur planparallelen und/oder konzentrischen Anordnung der Trägerplatte (260), des Stators (210) und des mindestens einen Neigungssensors (184) zueinander vorgesehen ist.

2. Rotationslaser nach Anspruch 1, **dadurch gekennzeichnet, dass** an einer dem mindestens einen Neigungssensor (184) zugewandten Oberseite (201) der Trägerplatte (260) zumindest eine erste Füge-Fläche (520) der Vielzahl von Füge-Flächen (431; 520; 731, 732, 733, 734; 980; 1080; 1132, 1134) ausgebildet ist und an einer von dem mindestens einen Neigungssensor (184) abgewandten Unterseite (202) der Trägerplatte (260) zumindest eine zweite Füge-Fläche (431) der Vielzahl von Füge-Flächen (431; 520; 731, 732, 733, 734; 980; 1080; 1132, 1134) ausgebildet ist, wobei die zumindest eine erste Füge-Fläche (520) planparallel zu der zumindest einen zweiten Füge-Fläche (431) ausgerichtet ist.

3. Rotationslaser nach Anspruch 1 oder 2, **dadurch gekennzeichnet, dass** an einem Außenumfang (218) des Trägerrohrs (211) zumindest eine dritte Füge-Fläche (733) der Vielzahl von Füge-Flächen (431; 520; 731, 732, 733, 734; 980; 1080; 1132, 1134) ausgebildet ist und an einer der Trägerplatte (260) zugewandten Oberseite (749) eines Umfangskragens (310) des Trägerrohrs (211) zumindest eine vierte Füge-Fläche (734) der Vielzahl von Füge-Flächen (431; 520; 731, 732, 733, 734; 980; 1080; 1132, 1134) ausgebildet ist.

4. Rotationslaser nach Anspruch 3, **dadurch gekennzeichnet, dass** das Trägerrohr (211) zumindest abschnittsweise in eine Ausnehmung (261) der Trägerplatte (260) eingreift, wobei die zumindest eine dritte Füge-Fläche (733) in der Ausnehmung (261) angeordnet ist.

5. Rotationslaser nach Anspruch 3 oder 4, **dadurch gekennzeichnet, dass** die zumindest eine vierte Füge-Fläche (734) an der von dem mindestens einen Neigungssensor (184) abgewandten Unterseite (202) der Trägerplatte (260) angeordnet ist.

6. Rotationslaser nach Anspruch 2 und Anspruch 4 oder Anspruch 5, **dadurch gekennzeichnet, dass** die zumindest eine vierte Füge-Fläche (734) des Trägerohrs (211) an der zumindest einen zweiten Füge-Fläche (431) der Trägerplatte (260) anliegt, wobei eine Schraubverbindung (320) die zumindest eine zweite Füge-Fläche (431) und die zumindest eine vierte Füge-Fläche (734) planparallel miteinander verbindet.

7. Rotationslaser nach einem der Ansprüche 3 bis 6, **dadurch gekennzeichnet, dass** das Trägerrohr (211) eine Innenaufnahme (212) ausbildet, in der eine fünfte Füge-Fläche (731, 732) der Vielzahl von Füge-Flächen (431; 520; 731, 732, 733, 734; 980; 1080; 1132, 1134) ausgebildet ist, welche zur Anordnung von mindestens einem Lagerelement zum drehbeweglichen Lagern der Spindel (125) vorgesehen ist.

8. Rotationslaser nach einem der Ansprüche 2 bis 7, **dadurch gekennzeichnet, dass** der mindestens eine Neigungssensor (184) ein Neigungssensor-Modulgehäuse (910) mit einer Außenseite (904, 902) aufweist, an der zumindest eine sechste Füge-Fläche (980; 1080) der Vielzahl von Füge-Flächen (431; 520; 731, 732, 733, 734; 980; 1080; 1132, 1134) ausgebildet ist.

9. Rotationslaser nach Anspruch 8, **dadurch gekennzeichnet, dass** die zumindest eine sechste Füge-Fläche (980; 1080) an einer ersten Außenseite (904) und/oder an einer zweiten Außenseite (902) angeordnet ist, wobei die erste und zweite Außenseite (904, 902) senkrecht zueinander angeordnet sind.

10. Rotationslaser nach Anspruch 8 oder 9, **dadurch gekennzeichnet, dass** die Trägerplatte (260) auf der dem mindestens einen Neigungssensor (184) zugewandten Oberseite (201) die zumindest eine erste Füge-Fläche (520) aufweist, wobei die zumindest eine erste Füge-Fläche (520) an der zumindest einen sechsten Füge-Fläche (980; 1080) des mindestens einen Neigungssensors (184) anliegt, wobei die zumindest eine erste Füge-Fläche (520) und die zumindest eine sechste Füge-Fläche (980; 1080) mittels einer Schraubverbindung (399) planparallel miteinander verbunden sind.

11. Rotationslaser nach einem der Ansprüche 8 bis 10, **dadurch gekennzeichnet, dass** das Neigungssensor-Modulgehäuse (910) einen Innenraum (1109) aufweist, in dem zumindest eine siebte Füge-Fläche (1132, 1134) der Vielzahl von Füge-Flächen (431; 520; 731, 732, 733, 734; 980; 1080; 1132, 1134) ausgebildet ist und eine Röhrenlibelle (940) im Innenraum (1109) angeordnet ist, wobei die Röhrenlibelle (940) auf der zumindest einen siebten Füge-Fläche (1132, 1134) angeordnet ist.

12. Rotationslaser nach Anspruch 11, **dadurch gekennzeichnet, dass** die zumindest eine siebte Füge-Fläche (1132, 1134) planparallel zu der zumindest einen sechsten Füge-Fläche (980) angeordnet ist.

13. Rotationslaser nach Anspruch 11, **dadurch gekennzeichnet, dass** die zumindest eine siebte Füge-Fläche (1132, 1134) orthogonal zu der zumindest einen sechsten Füge-Fläche (1080) angeordnet ist.
